# EUROPEAN PATENT APPLICATION

(11) **EP 2 031 496 A1**
(43) Date of publication of application: **04.03.2009**
(21) Application number: 08162746.5
(22) Date of filing: 21.08.2008
(51) Int. Cl.: G06F 3/12, H04L 29/08

(54) **Automatic installation of drivers for network printers**

(30) Priority: 31.08.2007 US 897616
(71) Applicant: Ricoh Company, Ltd., Tokyo 143-8555 (JP)
(72) Inventor: Matsushita, Mitsugu c/o Ricoh Company, Ltd., Tokyo 143-8555 (JP); Hattori, Tomoki c/o Ricoh Americas Corp. US Int. Prop. Office, Cupertino, CA 95014 (US)
(74) Representative: Schwabe - Sandmair - Marx

(57) **Abstract**

Tools in the form of apparatuses, systems and methods for automatic installation of a printer or other image forming device are provided. Such tools improve the turnaround time between when a printing device is received and is installed and on-line, ready for use by users.

## Description

### BACKGROUND OF THE INVENTION

### 1. Field of the Invention

This disclosure relates to printers and other image forming equipment. In particular, the disclosure relates to auto installation of printers and image forming equipment.

### 2. Description of the Related Art

In the current information age, there are often discussions of the desirableness of a paperless society. However, notwithstanding such discussions, there remains a great need by users of computers and other information terminals (that is, any of the various conventional devices which have a need to print on demand, such as personal computers, notebook computers, workstations, other types of computers, kiosks, PDAs, other information appliances, etc.) for printing functionality. Therefore, devices having printing or plotting functionality, such as printers, copiers, multi-function devices, etc., continue to play a significant role in information technology (IT) at home and at work.

A computer or information terminal typically needs printer driver software in order to communicate properly with a printing device. A printer driver generally provides a software interface that allows the operating system and software applications running on the computer or information terminal to interface functionally with the printing device. For example, the printer driver software may match standardized commands from the computer's operating system to specific capabilities of the printing device. Printer drivers are generally provided by printer manufacturers, and the drivers support specific printing devices and specific features.

Different printer drivers may be provided for different computer configurations (for example, different operating system versions may require different drivers). Additionally, for many printing devices different drivers are required to support different feature sets. Further, the set of printing devices and functionalities available to a user can change over time because printing devices can be replaced or updated. In many instances, a user finds a need to install additional printer driver software.

The tasks of obtaining the appropriate printer driver software and properly installing it can be challenging, even to an IT administrator.

From the perspective of an enterprise (for example, a company, another business establishment, an institution, an organization, etc.) the ROI (return on investment) is greater when printing resources as well as other IT (information technology) tools at large are used for the benefit of the enterprise at large over a network, rather than dedicated for the use of a few local users. Further, increasing new functionalities (such as higher output rates, improved image quality, additional functionalities, etc.) and lower cost of new printers and image forming equipment has made the option of adding new printers to the network more attractive.

A process of installing a printer on a network in a conventional system often involves multiple actions or steps, such as the following: registering the printer on an asset management server (or database); assigning a network address to the printer; configuring the printer appropriately, including configuring the network address on the printer, and applying other settings such as queue name and settings, printer communication protocol, network address, DNS name, quotas, cover sheet, etc.; creating a print queue on the print server; and notifying end users. The assorted tasks in the process typically involve actions by a plurality of IT administrators (that is, users with administrative rights in the IT system) having respective sets of responsibilities.

Such conventional approaches for installing a shared printer on a network are tedious and time-consuming, and from the perspective of the user, there is often an undesirable delay between when a new printer is received and when the printer is on-line and ready for printing.

### SUMMARY OF THE INVENTION

This disclosure provides tools for auto installation of a printer or other image forming device which enable the printing device to be on-line in a networked system and ready-for-use in a relatively short time compared to conventional systems. Such a tool enables a printer to be automatically installed, without being affected by delay or inaction by IT staff, after the printer is connected to the network.

A printer auto installation tool, in a preferred embodiment of this disclosure, detects automatically that a new printer is connected to the network, and obtains device identification information which identifies the new printer. The printer auto installation tool preferably includes a discovery part that in addition to detecting and identifying new printers, obtains device options information from the new printer, and utilizes the device options information, as necessary, in installing the printer. After a new printer is discovered and identified, the tool proceeds to automatically perform settings as required by the system.

In one aspect of this disclosure, the tool adds a printer queue for the new printer (as an example of required settings) by using the device identification information.

In another aspect of this disclosure, the printer auto installation tool generates an auto driver installer along with or instead of creating a print server queue. The identification information of the new printer obtained by the printer discovery part can be utilized to retrieve installer information from an asset management or printer information database, and the installer information is utilized in turn to add an auto driver installer for the new printer.

In a preferred embodiment of this disclosure, printer information, including the identification information of the new printer, is registered in an asset management database or printer information database. Such a database can store assorted printer information, including, for example, server information indicating one or more print server for servicing print jobs, information for an auto driver installer for the new printer, printer device options, etc. The term "print server" is used in a broad sense to include any computer or node that is configured to maintain a print queue and/or printer driver installer for one or more printers, and is not limited to hardware dedicated to servicing print jobs.

The printer auto installation tool can take on any of various forms. For example, the tool can be an appropriate program of instructions (for example, a part of a print application, a part of a printer driver, etc.) stored or transmitted via a computer readable medium and executable by a computer or another information terminal having a processor, and can be included in the new printer, or on an information terminal. Such tools can enable the user to obtain the benefit of a new printer connected to the network, by automatically installing the printer in the networked system if the printer had not yet been installed in the system.

### BRIEF DESCRIPTION OF THE DRAWINGS

The features of the subject matter of this disclosure can be more readily understood from the following detailed description with reference to the accompanying drawings wherein:
Fig. 1 shows a schematic diagram of a networked system, in accordance with an example of an embodiment of the present disclosure;
Fig. 2A shows a user interface window presenting printer queue information, according to an example of the present disclosure;
Fig. 2B shows a user interface presenting device options information, according to an example of the present disclosure;
Fig. 3A shows a screenshot of the terminal of an administrator at which an on-screen notification of newly discovered printer device has been posted;
Fig. 3B shows a screenshot of the administrator's terminal at which an on-screen notification of a disconnected device has been posted;
Fig. 4 shows a schematic representation of a printer entry, including network address, in an asset management database for a printer, according to an example of the present disclosure;
Fig. 5 shows a schematic representation of a print server table by serial number in an asset management database, according to an example of the present disclosure;
Fig. 6 shows a schematic representation of a print server table by IP address range in an asset management database, according to an example of the present disclosure;
Fig. 7A shows a schematic diagram of a networked system, in accordance with another example of an embodiment of the present disclosure;
Fig. 7B shows a user interface window presented by an example of a web-based driver installer;
Fig. 8 shows a schematic representation of a printer entry, including queue name, in an asset management database for a printer, according to an example of the present disclosure; and
Fig. 9 shows a schematic diagram of a networked system, in accordance with yet another example of an embodiment of the present disclosure.

### DETAILED DESCRIPTION OF THE PREFERRED EMBODIMENTS

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

This patent specification describes tools (in the form of apparatuses, systems and methods) for auto installation of a new printer in a networked system. A printer auto installation tool in accordance with a preferred embodiment of this disclosure stands alone (that is, is not on a print server), but can be in any of various forms and configurations.

The terms "printer" and "printing device" are used herein generically to include any output device having a printing or plotting functionality, and include multi-function devices having a copy and/or scanning functionality in addition to the printing or plotting functionality.

The term "new printer" is used herein in a broad manner to include both printers which are new, in the sense that it has not been previously used (except for testing purposes in the factory), as well as printers that have not been previously installed in the networked system.

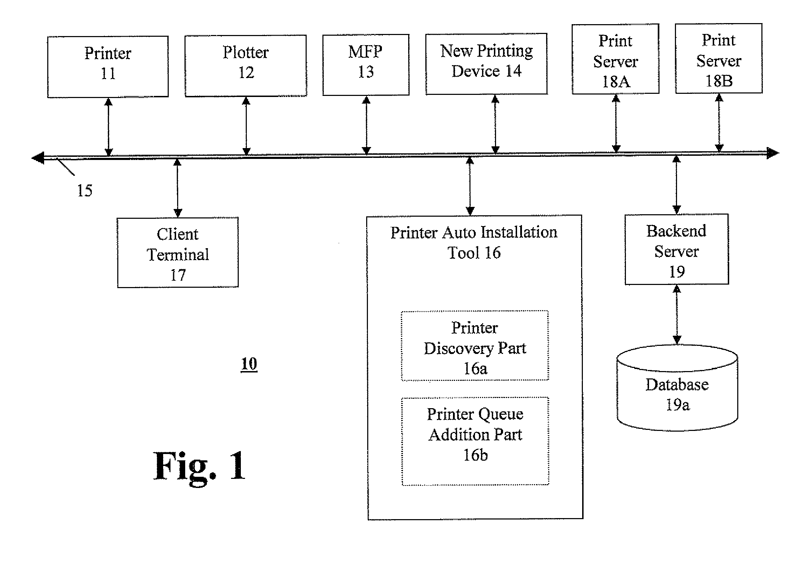

Fig. 1 shows a networked system 10, in accordance with an example of an embodiment of the present disclosure. The system 10 includes a plurality of printing devices, including a printer 11, a plotter 12 and a MFP 13, and a client terminal 17, print servers 17A and 17B and a backend server 19 coupled to a database 19a (for example, an asset management database or printer information database), all connected through network 15.

In addition, a printer auto installation tool 16 is also coupled to the network 15. The printer auto installation tool 16 includes a printer discovery part 16a to detect a printer (for example, new printing device 14) automatically when the printer is connected to the network, and a printer queue addition 16b to create a print queue, such as on the print server 17A or 17B (for example, a Windows Print Server), automatically.

The printer discovery part 16a can discover printers on the network 15 by using any of various known discovery methods including, but not limited to, SNMP (Simple Network Management Protocol; such as versions v1, v2, v3) broadcast, ping sweep, DNS, Ports, NetBIOS, WMI, Bonjour, Zeroconf, etc. In addition, the printer discovery part may also consult a MIB (Management Information Base) and/or an asset management database, such as through backend server 19. The discovery may be a general discovery broadcast or may be guided by a specified search range, network address, host name, model name, device name, previous search settings, etc.

Once a new printer is discovered, the discovery part 16a can also discover device options or capabilities (for example, duplex/simplex, staple, number of copies, paper source, paper size and type, portrait, color, two-up, hole punch, scaling, etc.) of the printer by communication with the printer, and the results of the discovery can be presented through a user interface. Printer options and capabilities can be discovered using known protocols including, but not limited to, SNMP, IPP, PJL, etc.

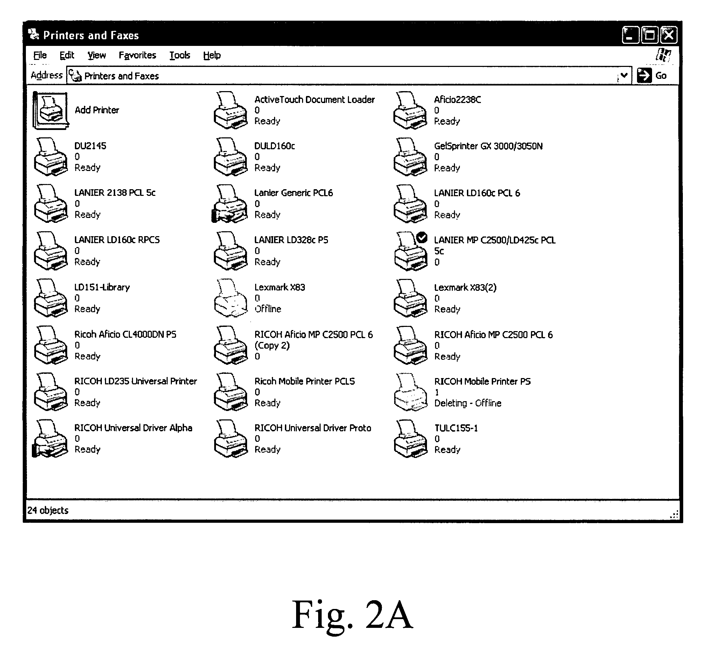

After the printer discovery part 16a discovers a new printer on the network 15, the printer queue addition part 16b creates a print queue for the new printer. A print queue can be created by using, for example, the Microsoft PrintUI.dll command. An example of a user interface providing print queue information for a system is shown in Fig. 2A. In the example shown in Fig. 2A, each printer has no jobs on its print queue, except that the "RICOH Mobile Printer PS" has one job (in the process of being deleted).

When a print queue is created, the printer queue addition part 16b preferably also configures device options automatically. Device options can be configured by utilizing the printer options or capabilities information discovered by the printer discovery part 16a, and/or by using captured printer MIB information from the database 19a. After device options are configured automatically for the new printer, a user with authorized access can edit the device options.

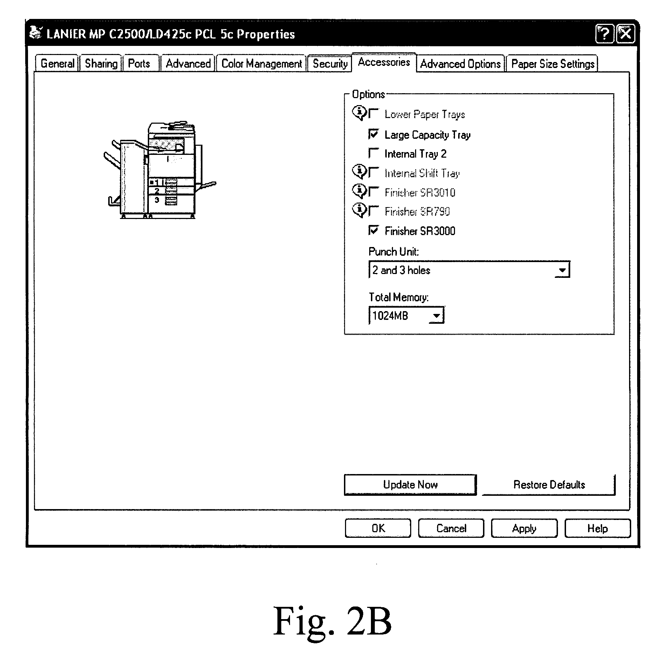

In the example of Fig. 2A, the user can use the user interface to select a printer and then view the device options of the selected printer. An example of a user interface which can be presented to the user and allows the user to edit device options is shown in Fig. 2B. Preferably, only users who are properly authenticated and duly authorized are allowed to edit device options.

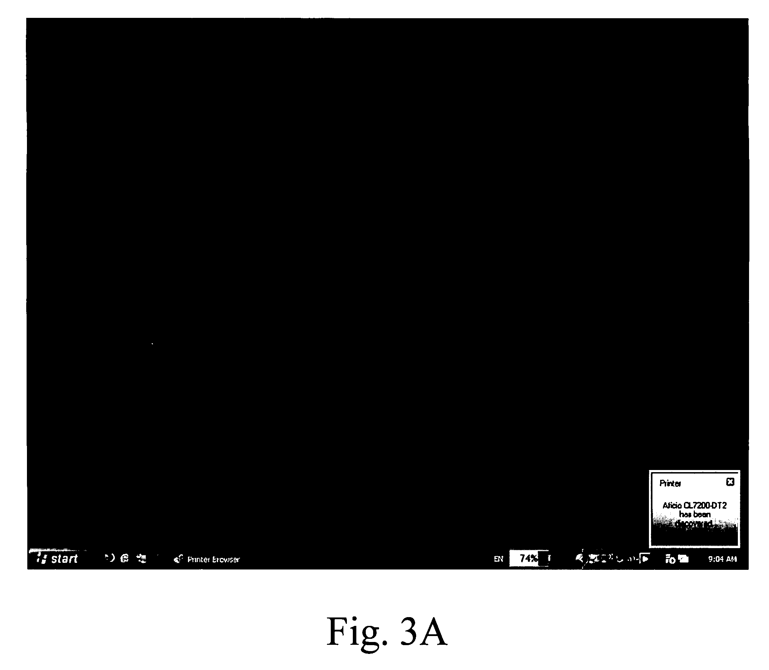

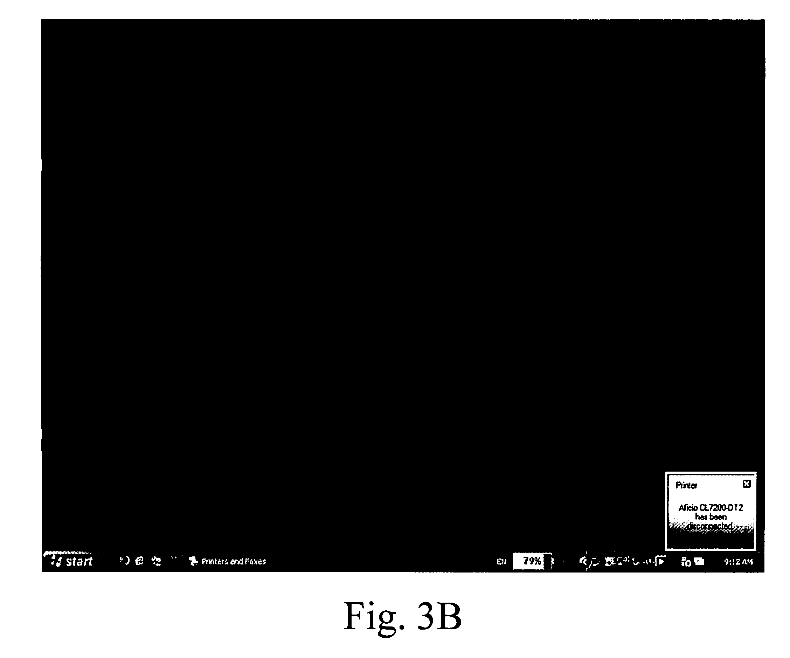

If the discovery part 16a discovers new network devices, a message is preferably sent to the administrator. For example, an e-mail can be sent to the administrator. In addition (or alternatively), an on-screen notification may be generated, such as shown in Fig. 3A. After sending the notification, the auto installation tool can start to create printer queues. Conversely, if a previously connected device becomes disconnected, a notification can likewise be sent to notify the administrator that the device has been disconnected (Fig. 3B), and the queues for the disconnected devices can be disabled or deleted.

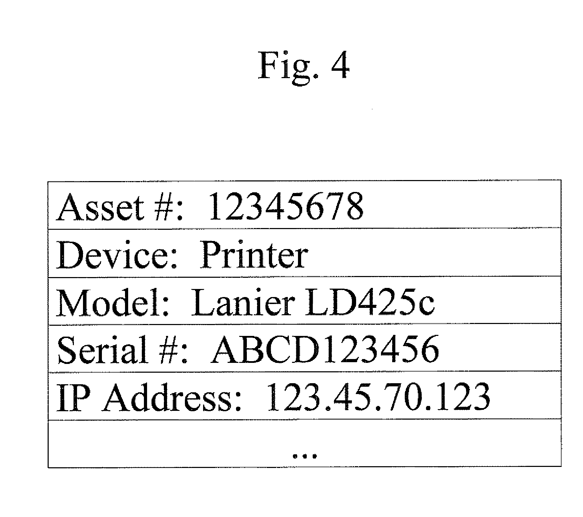

The printer auto installation tool preferably also includes a function to register the printer information on the backend system 19 (for example, asset management database). An example of a new entry in the asset management database is shown in Fig. 4.

In the example of Fig. 4, the IP address assigned to the printer is included in the entry for the printer in the asset management database. The system can use DHCP (Domain Host Control Protocol) which is a protocol for dynamically assigning IP addresses to networked devices. In a network with a DHCP server, a device can automatically be given a unique IP address each time it connects to the network. When a device logs-on to the network, the DHCP server selects an IP address from a master list and assigns it to the device.

However, the printer auto installation tool can find the printer (for example, by using information from the backend system) and then configure the static IP address, in place of the IP address dynamically assigned by the DHCP server. For example, the printer auto installation tool configures the printer with a static IP address after the printer is connected to the network and is assigned a dynamic IP address by the DHCP system.

The static IP address may be manually configured or may be assigned based on information in the asset management database associated with the printer. For example, after a static IP address is selected for the printer, the selected IP address is stored in the backend database. The printer can be configured with the static IP address immediately or at a later time (with the static IP address being retrieved from the backend database), and a printer queue is created on a print server and is associated with the static IP address of the printer.

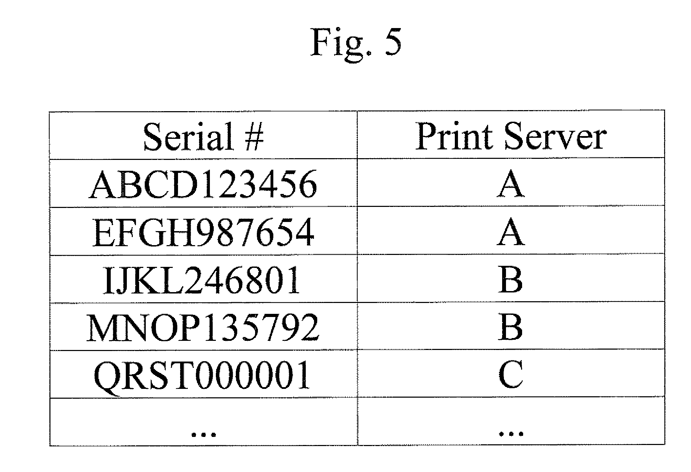

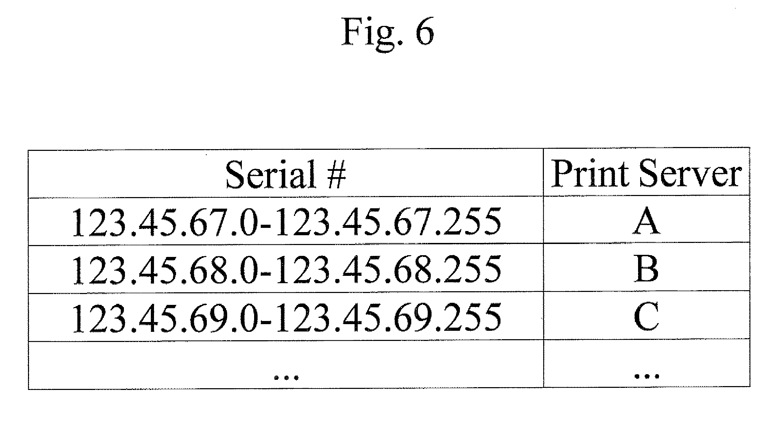

In another example, the backend system can include an LDAP (Lightweight Directory Access Protocol) server which enables a user to locate devices, files, organizations, individuals, etc., in the networked system, and maintains data regarding access and printing rights. The LDAP server or other backend server can maintain information indicating the print server (or node servicing the printer) that should be used for each printer. In such an example, the printer queue addition part 16b obtains such print server information and adds a print queue on the corresponding print server for the new printer. The printer server information can be a serial number or printer name (for example, Fig. 5). In another example, the printer server information specifies network address range (Fig. 6).

The printer auto installation tool can also include a function to copy the print queue which was created on one print server to one or more other print servers. For example, such other server can be a redundant server (for fault tolerance) or a backup server. In another example, multiple print servers may be defined for one printer (for example, a printer that has particularly heavy usage, a printer that has a plurality of functionalities, with some functionalities being processing-intensive).

In another aspect of this disclosure, the printer auto installation tool can include a function to create an auto printer driver installer along with or instead of creating a print server queue.

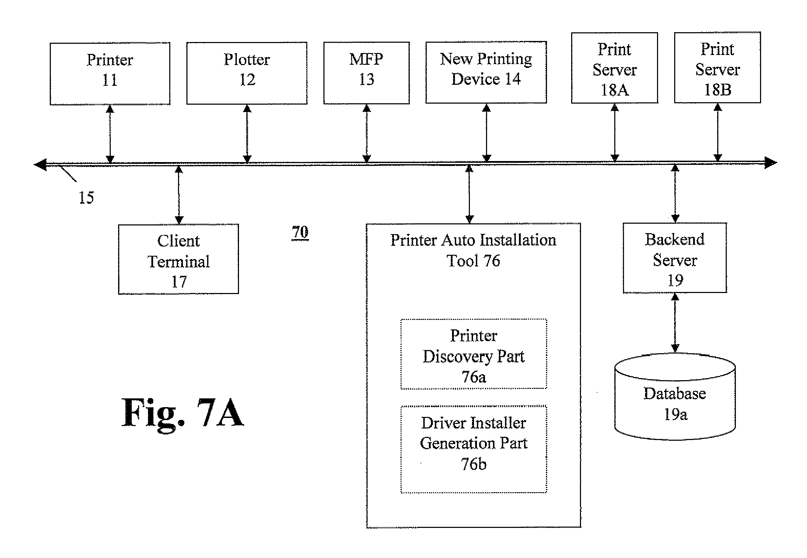

Fig. 7A shows another example of an embodiment of a networked system. System 70 shown in Fig. 7A is similar to the system 10 shown in Fig. 1, except that printer auto installation tool 76 includes a printer driver installer generation part 76b, in place of the printer queue addition part 16b.

The printer driver installer generation part 76b uses the identification information of the new printer obtained by the printer discovery part to retrieve installer information from the asset management or printer information database 19a, and uses the installer information to add an auto driver installer for the new printer. Thus, the backend system maintains a printer database for storing printer information and corresponding driver installer information of a plurality of printers. Based on the driver installer information corresponding to a specific new printer, a corresponding printer driver can be downloaded and installed by applying a driver installer corresponding to the new printer. The printer driver installer generation part can be configured to require little or no user input, and therefore the appropriate device driver can be automatically installed, without delay.

In addition, the printer driver installer generation part can register printer information, including the identification information of the new printer, in the asset management database or printer information database. For example, the registered printer information can include information associated with the auto driver installer for the new printer.

The auto driver installer can be executed to install an appropriate driver for the printer on one or more print servers, or an authorized user can download or execute the auto driver installer to install an appropriate driver on the user's client terminal (for example, peer-to-peer printing). In addition, a function which updates the driver automatically when the driver is updated can be optionally provided. In the example in which the driver is installed on multiple print servers, if a new version of the driver is installed on one print server, the printer driver on another print server can also be updated automatically. In another example, when the printer driver is updated on the vendor's web page, the tool detect the new version and the driver on the print server can be updated automatically.

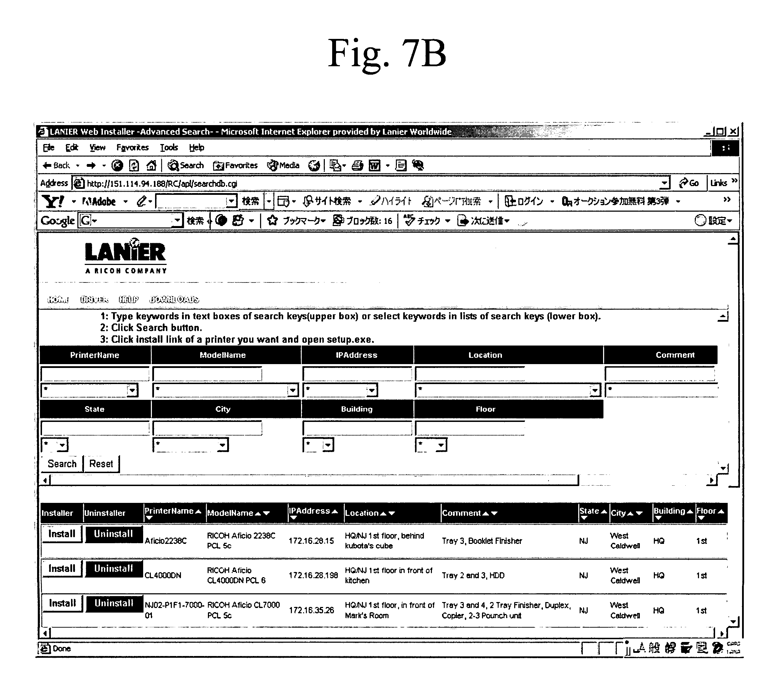

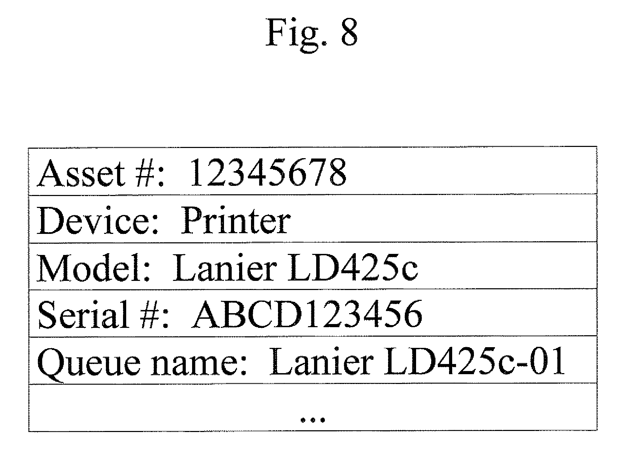

For example, the auto driver installer can be a web-based driver installer, such as described in commonly-owned U.S. application Serial No. 11/395,116, filed March 31, 2006 and entitled "Web Installer Driver", the entire contents of which are incorporated herein by reference. A user interface window for an example of such a web-based driver installer is shown in Fig. 7B. The printer auto installation tool can also include a function to set the printer queue name using printer information, when the queue is created. For example, the queue name can incorporate host name (e.g., the host name is LANIER001, and the queue name is made to be LANIER001-01), model name, etc. Such a queue name makes it readily identifiable with the corresponding printer. In another example, the queue name is automatically generated (for example, by concatenating model name with an index number) when an entry for the printer is created in the asset management database, and the queue name is retrieved from the asset management database. In the example shown in Fig. 8, the serial number of the printer (ABCD123456) can be used to query the database and retrieve the associated queue name (Lanier LD425c-01).

An additional function can be provided to notify the printer information to end users. For example, an e-mail can be sent to end users which includes a link to the print queue (such as on a print server) or a link to an automatic driver installer. In another example, a link to the print queue or a link to an automatic driver installer is placed on a page of a print portal.

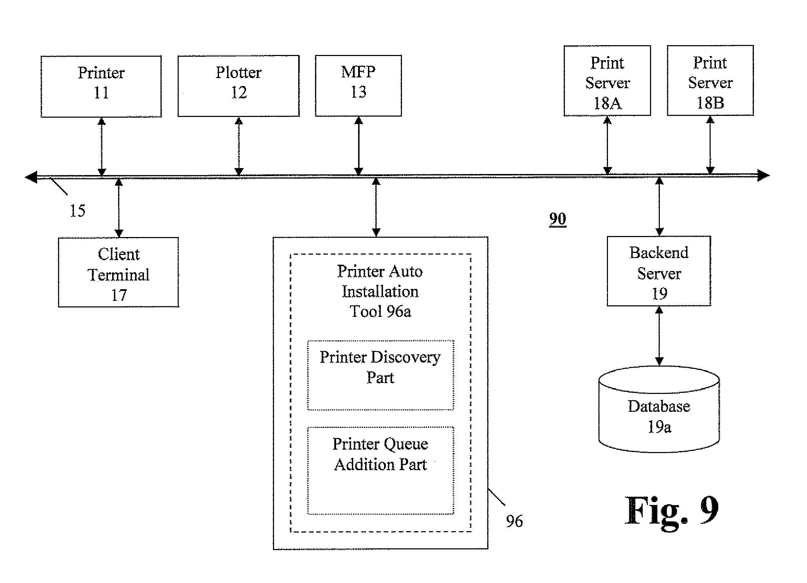

The printer auto installation tool can be a standalone device (for example, on a computer), such as shown in Fig. 1, or can be provided in the new printer, such as shown in Fig. 9. The networked system shown in Fig. 9 can be configured similar to the system of Fig. 1, except that printer auto installation tool 96a resides in new printing device 96. In the embodiment shown in Fig. 9, the printer auto installation tool 96a can perform auto installation upon connection to the network 15, or upon communication with the print server 18A or 18B, or upon communication with another device such as client terminal 17. In addition, the printer auto installation tool 96a can run natively or be provided as a service to any of the devices connected to the network (such as the print server 18A or 18B, the client terminal 17, etc.).

The above specific embodiments are illustrative, and many variations can be introduced on these embodiments without departing from the spirit of the disclosure or from the scope of the appended claims. For example, elements and/or features of different examples and illustrative embodiments may be combined with each other and/or substituted for each other within the scope of this disclosure and appended claims.

## Claims

1. A printer auto installation apparatus connected to a print server through a network, said apparatus **characterized by**:
a printer discovery part configured to detect automatically that a new printer is connected to the network, and after said new printer is detected obtain identification information identifying said new printer; and
a printer queue addition part configured to add a printer queue for said new printer by using said identification information of the new printer obtained by said printer discovery part.

2. The apparatus of claim 1, wherein said printer discovery part obtains device options information from the new printer, and said printer queue addition part configures said printer queue of said new printer based on said device options information obtained from the new printer.

3. An apparatus for auto installation of a printer, said apparatus **characterized by**:
a printer discovery part configured to detect automatically that a new printer is connected to a network, and after said new printer is detected obtain identification information identifying said new printer; and
a driver installer generation part configured to add an auto driver installer for said new printer by using said identification information of the new printer obtained by said printer discovery part to retrieve installer information from an asset management database or printer information database, and register printer information including the identification information of the new printer, in an asset management database or printer information database, wherein said printer information registered in said asset management database or printer information database for the new printer includes information associated with said auto driver installer for the new printer.

4. An apparatus for auto installation of a printer, said apparatus **characterized by**:
a printer discovery part configured to detect automatically that a new printer is connected to a network, and after said new printer is detected obtain identification information identifying said new printer; and
a printer queue addition part configured to add a printer queue for said new printer by using said identification information of the new printer obtained by said printer discovery part, and register printer information including the identification information of the new printer, in an asset management database or printer information database.

5. The apparatus of claim 4, wherein said printer queue addition part obtains, from said asset management database or printer information database, server information indicating a print server for servicing print jobs directed to said new printer, and adds said print queue for said new printer on said print server.

6. The apparatus of claim 4, wherein said printer queue addition part adds said print queue for said new printer on a print server.

7. The apparatus of claim 6, wherein said printer queue addition part copying said print queue for said new printer from said print server to one or more additional print servers.

8. The apparatus of claim 7 further comprising:
a driver update part configured to update a driver for the new printer on said print server, and update said one or more additional print servers with the updated driver for the new printer.

9. The apparatus of claim 6, wherein said printer queue addition part adds said print queue for said new printer on said print server, after a static network address is configured on said new printer, and said network address is used in adding said printer queue.

10. The apparatus of claim 4, wherein said printer queue addition part sets a printer queue name utilizing said identification information of the new printer.

11. The apparatus of claim 4 further comprising:
a notification part configured to provide to users a hyperlink to the printer queue of the new printer.

12. The apparatus of claim 4, wherein said apparatus is a print application provided through said network to an information terminal enabling a user to select a printer for printing a print job.

13. The apparatus of claim 4, wherein said apparatus is a printer driver.

14. The apparatus of claim 4, wherein said apparatus is included in said new printer.

15. The apparatus of claim 4, wherein said apparatus is included in an information terminal configured for user selection of a printer for printing a print job.

16. A printing system for information terminals connected through a network, said printing system **characterized by**:
at least one print server;
a printer information database;
a printer auto installation tool connected to said at least one print server through a network and comprising:
a printer discovery part configured to detect that a new printer is connected to the network, and after said new printer is detected, obtain identification information identifying said new printer from said printer information database; and
a printer queue addition part configured to add a printer queue for said new printer on an appropriate one of said at least one print server, by using said identification information of the new printer.

17. A method for auto installation of a printer in a printing system, said method **characterized by** the steps of:
(a) detecting a new printer connected to a network;
(b) automatically obtaining identification information identifying said new printer, after said new printer is detected in step (a); and
(c) automatically adding a printer queue or driver auto installer for said new printer by using said identification information of the new printer.

18. The method of claim 17 further comprising:
determining a print server for servicing print jobs directed to said new printer,
wherein said print queue or driver auto installer for said new printer is added in step (c) on said print server.

19. The method of claim 18 further comprising:
copying said print queue or driver auto installer for said new printer from said print server to one or more additional print servers.

20. The method of claim 18 further comprising:
(d) updating a driver for the new printer on said print server; and
(e) automatically updating said one or more additional print servers with the updated driver for the new printer, when the driver on said print server for the new printer is updated in step (d).

21. The method of claim 17 further comprising:
obtaining device options information automatically from the new printer; and
configuring said printer queue or driver auto installer for said new printer based on said device options information.

22. The method of claim 17 further comprising:
registering printer information including the identification information of the new printer, in an asset management database or printer information database.

23. The method of claim 22, wherein said printer information registered in said asset management database or printer information database for the new printer includes information for a driver auto installer for the new printer.

24. The method of claim 17 further comprising:
configuring a static network address on said new printer,
wherein said static network address is used in adding said printer queue in step (c).

25. The method of claim 17 wherein said identification information of the new printer includes one or more of device name, model name and host name.

26. The method of claim 17 further comprising:
automatically setting a printer queue name utilizing said identification information of the new printer.

27. The method of claim 17 further comprising:
automatically providing to users a hyperlink to the printer queue added in step (c).
